# EUROPÄISCHE PATENTSCHRIFT

(11) **EP 2 468 152 B1**
(45) Veröffentlichungstag und Bekanntmachung des Hinweises auf die Patenterteilung: **04.03.2015**
(21) Anmeldenummer: 11194435.1
(22) Anmeldetag: 20.12.2011
(51) Int. Cl.: A47J 31/44

(54) **Kaffeemaschine**
Coffee machine
Machine à café

(30) Priorität: 24.12.2010 CN 201020680767 U
(43) Veröffentlichungstag der Anmeldung: 27.06.2012
(73) Patentinhaber: BSH Bosch und Siemens Hausgeräte GmbH, 81739 München (DE)
(72) Erfinder: Almendros Carmona, Ismael Jesus, 31012 Pamplona (ES); Jiang, Ji, 210000 Nanjing (CN); Zhang, Shurong, 210042 Nanjing (CN)

(56) Entgegenhaltungen:
- CN-U- 201 452 866
- US-A- 1 155 261
- US-A- 1 263 892
- US-A1- 2004 112 896
- US-A1- 2005 145 112

## Beschreibung

### Gebiet der Erfindung

Die vorliegende Erfindung bezieht sich auf eine Kaffeemaschine, insbesondere auf eine Öffnungs- und Schließeinheit für eine Abdeckplatte einer Kaffeemaschine.

### Technischer Hintergrund

Bisher bekannte Kaffeemaschinen umfassen, wie in der chinesischen Offenlegungsschrift CN201452866 gezeigt ist, ein Gehäuse und eine am Gehäuse angeordnete Abdeckplatte. Diese ist über eine feste Schwenkachse mit dem Gehäuse so verbunden, dass die Abdeckplatte relativ zum Gehäuse bewegbar ist und somit geöffnet oder geschlossen werden kann. Im oberen Bereich innerhalb des Gehäuses befindet sich ein Kaffeemehlbehälter, oberhalb dessen eine mit einem Wasserbehälter verbundene Düse vorhanden ist. Mit dieser Düse kann der Kaffeemehlbehälter mit Heißwasser befüllt werden, um durch die Mischung des Wassers mit dem Kaffeemehl Kaffee zu bereiten. Im unteren Bereich des Gehäuses ist ein Aufnahmeraum für die zugehörige Kaffeekanne ausgebildet. Nachdem die Kaffeekanne in den Aufnahmeraum eingesetzt worden ist, wird ein im Bodenbereich des Kaffeemehlbehälters befindliches und aus dem Gehäuse herausragendes Ventil durch den Kopf der Kaffeekanne nach oben gedrückt, so dass der Kaffee aus dem Kaffeemehlbehälter in die Kanne einlließen kann.

Aus der US 200410112896 A1 ist ein Behälter mit einer Abdeckplatte bekannt, die öffen- und schließbar an der Oberseite des Gehäuses angeordnet ist, wobei eine Öffnungs- und Schließeinheit zwischen Gehäuse und Abdeckplatte so ausgebildet ist, dass sich die Abdeckplatte während des Öffnens gegenüber dem Gehäuse nach unten bewegen kann.

Als Haushaltsgerät ist eine Kaffeemaschine typischerweise auf einer Küchenarbeitsplatte platziert, oberhalb der die Küchenschränke freihängend angebracht sind. Zur Verwendung der Kaffeemaschine muss die Abdeckplatte völlig geöffnet werden, um Wasser in den Wasserbehälter einlassen zu können. Dafür kann jedoch der Raum zwischen Kaffeemaschine und Küchenschränken nicht ausreichen, so dass sich die Abdeckplatte nicht völlig öffnen lässt und dadurch die Wassereinfüllung erschwert wird.

Zur Lösung der genannten Probleme ist es notwendig, bekannte Kaffeemaschinen zu verbessern.

### Offenbarung der Erfindung

Die Aufgabe der vorliegenden Erfindung besteht darin, eine Kaffeemaschine mit einer verbesserten Öffnungs- und Schließeinheit für eine Abdeckplatte vorzuschlagen, mit welcher Öffnungs- und Schließeinheit die Abdeckplatte der Kaffeemaschine selbst in einem vertikal begrenzten Raum völlig geöffnet werden kann.

Erfindungsgemäß wird die Aufgabe gelöst durch eine Kaffeemaschine mit
- einem Gehäuse,
- einer Abdeckplatte, die öffen- und schließbar an der Oberseite des Gehäuses angeordnet ist,
- einer Öffnungs- und Schließeinheit zwischen Gehäuse und Abdeckplatte, die so ausgebildet ist, dass sich die Abdeckplatte während des Öffnens gegenüber dem Gehäuse nach unten bewegen kann.

Erfindungsgemäß ist die Öffnungs- und Schließeinheit an einem Ende über eine Schwenkachse mit einem der Bauteile Gehäuse und Abdeckplatte fest verbunden und am anderen Ende derart mit dem anderen Bauteil verbunden, dass dieses eine Schwenkbewegung ausführen kann.

Erfindungsgemäß umfasst die Öffnungs- und Schließeinheit eine erste Schwenkachse, die mit einem der Bauteile Gehäuse und Abdeckplatte fest verbunden ist, eine zweite Schwenkachse, die dem anderen Bauteil eine Schwenkbewegung erlaubt, sowie eine zwischen erster und zweiter Schwenkachse geschaltete Koppelstange.
Erfindungsgemäß kann die zweite Schwenkachse gegenüber dem anderen Bauteil gleiten.

In einer weiteren Weiterbildung der vorliegenden Erfindung sind am anderen Bauteil Führungsschienen angeordnet.

In einer weiteren Weiterbildung der vorliegenden Erfindung gleitet die zweite Schwenkachse entlang den Führungsschienen.

In einer weiteren Weiterbildung der vorliegenden Erfindung umfasst die Öffnungs- und Schließeinheit ferner einen in den Führungsschienen aufgenommenen und entlang den Führungsschienen gleitenden Schieber, der mit der zweiten Schwenkachse fest verbunden ist.

In einer weiteren Weiterbildung der vorliegenden Erfindung ist das eine Bauteil als Gehäuse und das andere Bauteil als Abdeckplatte ausgebildet.

In einer weiteren Weiterbildung der vorliegenden Erfindung ist das eine Bauteil als Abdeckplatte und das andere Bauteil als Gehäuse ausgebildet.

In einer weiteren Weiterbildung der vorliegenden Erfindung befindet sich die Abdeckplatte bei ihrer Öffnungsbewegung gegenüber dem Gehäuse zumindest teilweise unterhalb einer Oberkante des Gehäuses und der Bereich der Abdeckplatte, der unterhalb der Oberkante des Gehäuses liegt, nimmt einen umso größeren Anteil ein, je weiter die Abdeckplatte geöffnet wird.

Im Vergleich zum Stand der Technik bietet die vorliegende Erfindung nachfolgende Vorteile: Da die Öffnungs- und Schließeinheit der Abdeckplatte während des Öffnens eine gegenüber dem Gehäuse nach unten gerichtete Bewegung erlaubt, kann die Höhe, um die die Abdeckplatte über die Oberkante des Gehäuses herausragt, über den gesamten Öffnungsvorgang klein gehalten werden. Mit anderen Worten kann eine völlige Öffnung der Abdeckplatte gewährleistet werden, selbst wenn sich die Kaffeemaschine in einem vertikal begrenzten Raum befindet.

### Darstellung der Abbildungen

Es zeigen
- ABB 1: in räumlicher Darstellung eine Ausführungsform einer erfindungsgemäßen Kaffeemaschine,
- ABB 2: in räumlicher Darstellung einen Teilbereich der Kaffeemaschine gemäß ABB 1 zur Aufnahme einer Kaffeekanne,
- ABB 3: in räumlicher Darstellung die Beweglichkeit einer Abdeckplatte relativ zu einem Gehäuse bei der Kaffeemaschine gemäß ABB 1, wobei eine Ausführungsform einer zwischen Abdeckplatte und Gehäuse befindlichen Öffnungs- und Schließstruktur mit dargestellt ist, und
- ABB 4: in ähnlicher Darstellung wie ABB 3 eine weitere Ausführungsform der Öffnungs- und Schließstruktur.

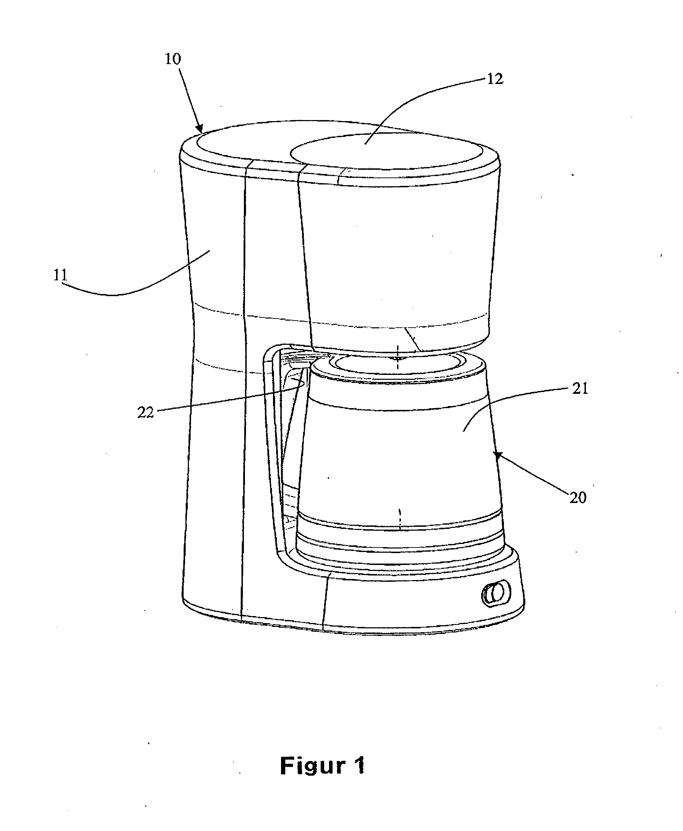

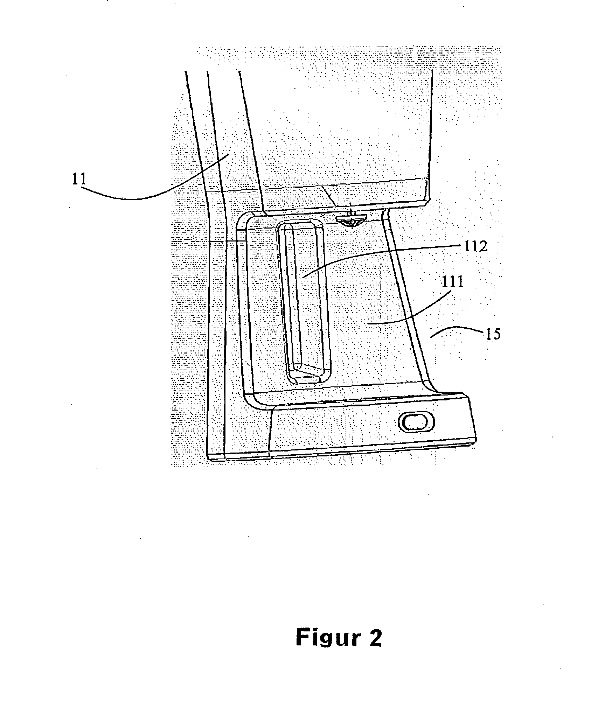

In ABB 1 ist eine Ausführungsform einer erfindungsgemäßen Kaffeemaschine und ihrer zugehörigen Kaffeekanne dargestellt. Hierbei umfasst die Kaffeemaschine 10 ein aufrecht stehendes Gehäuse 11 und eine an der Oberseite des Gehäuses 11 angeordnete Abdeckplatte 12, während die Kaffeekanne 20 einen Kannenkörper 21 und einen von einer Seitenwand des Kannenkörpers seitlich hervorragenden Handgriff 22 aufweist. Wie auch aus ABB 2 zu ersehen ist, verfügt das Gehäuse 11 in seinem unteren Bereich über einen Aufnahmeraum 15 für den Kannenkörper 21 der Kaffeekanne. Bei der sich im Aufnahmeraum befindenden Innenwand 111 des Gehäuses 11 handelt es sich um eine gekrümmte Fläche, in der eine Aufnahmenut 112 ausgebildet ist, deren Tiefenrichtung der radialen Richtung der gekrümmten Fläche und deren Längsrichtung der Höhenrichtung des Gehäuses 11 entspricht. So kann der Aufnahmeraum 15, nachdem die Kaffeekanne 20 ins Gehäuse 11 eingesetzt worden ist, zur Aufnahme des Kannenkörpers 21 der Kaffeekanne und die Aufnahmenut 112 zur Aufnahme des Handgriffs 22 der Kaffeekanne dienen. Dadurch, dass sich der Handgriff der Kaffeekanne ins Gehäuse der Kaffeemaschine einpassen lässt, müssen nur verhältnismäßig klein dimensionierte und weniger robuste Packmittel eingesetzt werden, was eine Kosteneinsparung bedeutet. Überdies ist der Handgriff der Kaffeekanne durch das Gehäuse der Kaffeemaschine in seiner Lage fixiert, so dass die Kaffeekanne nicht wegen unbeabsichtigter Bewegungen während des Transportes beschädigt wird.

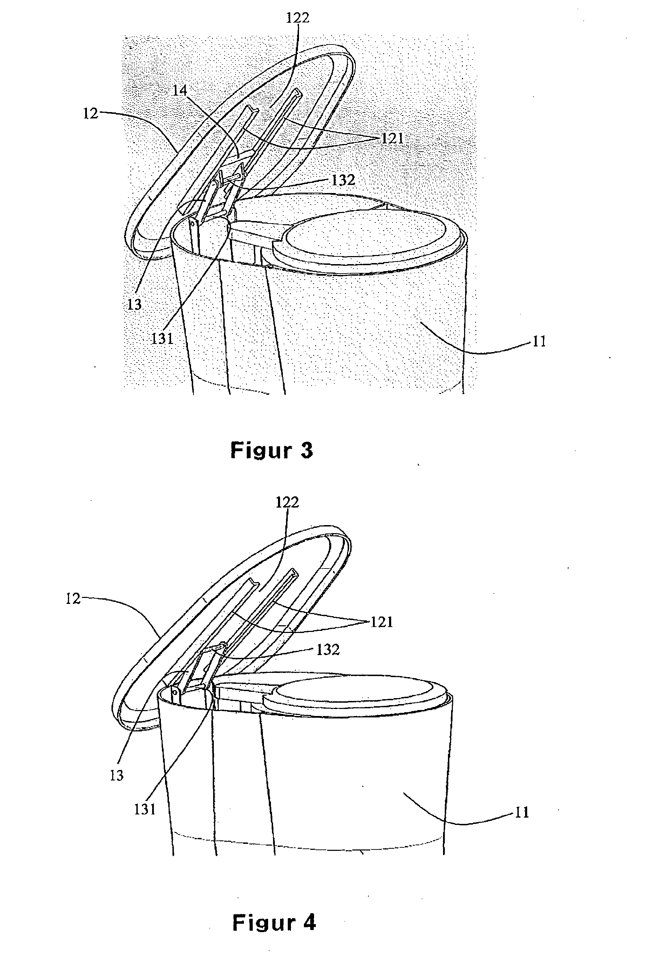

Gemäß der Ausführungsform in ABB 3 umfasst die Kaffeemaschine ferner eine zwischen Abdeckplatte 12 und Gehäuse 11 ausgebildete Öffnungs- und Schließeinheit. Diese umfasst wiederum eine fest am Gehäuse 11 angebrachte, erste Schwenkachse 131, eine zweite Schwenkachse 132, die der Abdeckplatte 12 eine Schwenkbewegung erlaubt, sowie eine die erste und zweite Schwenkachse 131, 132 verbindende Koppelstange 13. An der Innenwand der Abdeckplatte 12 sind weiterhin zwei voneinander beabstandet angeordnete Führungsschienen 121 vorhanden. Zusätzlich hierzu umfasst die Öffnungs-und Schließeinheit einen Schieber 14, der einerseits in dem Zwischenraum 122 der Führungsschienen 121 aufgenommen ist und entlang den Führungsschienen 121 gleitet. Andererseits ist der Schieber 14 fest mit der zweiten Schwenkachse 132 verbunden. Durch eine solche Anordnung kann die Abdeckplatte 12 mit einem kleinen Winkel zum Gehäuse 11 geöffnet werden und sich zugleich gegenüber dem Gehäuse 11 nach unten bewegen, so dass sich die Abdeckplatte zumindest teilweise unterhalb einer Oberkante des Gehäuses 11 befindet. Zudem nimmt der Bereich der Abdeckplatte, der unterhalb der Oberkante des Gehäuses liegt, einen umso größeren Anteil ein, je weiter die Abdeckplatte geöffnet wird. Auf diese Weise kann die Höhe, um die die Abdeckplatte über die Oberkante des Gehäuses herausragt, über den gesamten Öffnungsvorgang klein gehalten werden. Mit anderen Worten kann eine völlige Öffnung der Abdeckplatte gewährleistet werden, selbst wenn sich die Kaffeemaschine in einem vertikal begrenzten Raum befindet.

ABB 4 zeigt eine weitere Ausführungsform einer Öffnungs- und Schließeinheit für eine Kaffeemaschine, welche sich von der Ausführungsform gemäß ABB 3 im Wesentlichen dadurch unterscheidet, dass hier kein Schieber vorgesehen ist. Stattdessen erstrecken sich die beiden Enden der zweiten Schwenkachse 132 bis in die Führungsschienen 121, so dass die zweite Schwenkachse 132 entlang den Führungsschienen 121 gleiten kann. Gleichzeitig dazu kann sich die Abdeckplatte 12 auch um die zweite Schwenkachse 132 drehen. Mit dieser Ausgestaltung können die gleichen Effekte wie bei der gemäß ABB 3 ausgeführten Öffnungs- und Schließstruktur erzielt werden.

Es liegt den Fachleuchten auf diesem Gebiet nahe, dass auch die folgenden Varianten dieselbe technische Wirkung wie bei der in ABB 3 oder 4 offenbarten Ausführungsform haben: Es kann vorgesehen sein, dass die zweite Schwenkachse fest mit der Abdeckplatte verbunden ist, während sich die Führungsschienen am Gehäuse befinden, wobei die erste Schwenkachse dann als in den Führungsschienen verschiebbar ausgeführt ist. Darüber hinaus ist es denkbar, dass neben einer festen Verbindung zwischen erster Schwenkachse und Gehäuse auch die zweite Schwenkachse und die Abdeckplatte miteinander fest verbunden sind. Dies wirkt sich zwar nicht so gut aus wie die Ausführungsform gemäß ABB 3 oder 4, kann jedoch die Höhe der Abdeckplatte oberhalb der Oberkante des Gehäuses bei völlig geöffneter Abdeckplatte bis zu einem gewissen Grad reduzieren. Des Weiteren kann die Öffnungs- und Schließeinheit auch als Mehrgelenkgestänge ausgeführt sein, das eine kontinuierliche, richtungswechselnde Bewegung der Abdeckplatte während des Öffnens unterstützt, damit sich die Abdeckplatte zum größten Teil unterhalb der Oberkante des Gehäuses befindet. Auch dadurch lässt sich die Höhe der Abdeckplatte oberhalb der Oberkante des Gehäuses bei völlig geöffneter Abdeckplatte verringern.

Bisher wurden Ausführungsformen der vorliegenden Erfindung dargestellt und beschrieben, die jedoch nicht jeweils nur auf eine separate Ausgestaltung beschränkt sind. Im Rahmen der vorliegenden Erfindung können vielmehr die in den einzelnen Ausführungsformen offenbarten Ausgestaltungen auf geeignete Weise miteinander zu anderen, den Fachleuten auf diesem Gebiet naheliegenden Ausführungsformen kombiniert werden.

## Patentansprüche

1. Kaffeemaschine (10) mit einem Gehäuse (11), einer Abdeckplatte (12), die öffen- und schließbar an der Oberseite des Gehäuses (11) angeordnet ist, einer Öffnungs- und Schließeinheit zwischen Gehäuse (11) und Abdeckplatte (12), die so ausgebildet ist, dass sich die Abdeckplatte (12) während des Öffnens gegenüber dem Gehäuse (11) nach unten bewegen kann, wobei die Öffnungs- und Schließeinheit an einem Ende über eine Schwenkachse mit einem der Bauteile Gehäuse (11) und Abdeckplatte (12) fest verbunden und am anderen Ende derart mit dem anderen Bauteil verbunden ist, dass dieses eine Schwenkbewegung ausführen kann und wobei die Öffnungs- und Schließeinheit eine erste Schwenkachse (131), die mit einem der Bauteile Gehäuse (11) und Abdeckplatte (12) fest verbunden ist, eine zweite Schwenkachse (132), die dem anderen Bauteil eine Schwenkbewegung erlaubt, sowie eine zwischen erster und zweiter Schwenkachse (131, 132) geschaltete Koppelstange (13) umfasst, **dadurch gekennzeichnet, dass** die zweite Schwenkachse (132) gegenüber dem anderen Bauteil gleiten kann.

2. Kaffeemaschine gemäß Anspruch 1, **dadurch gekennzeichnet, dass** am anderen Bauteil Führungsschienen (121) angeordnet sind.

3. Kaffeemaschine gemäß Anspruch 2, **dadurch gekennzeichnet, dass** die zweite Schwenkachse entlang den Führungsschienen (121) gleitet.

4. Kaffeemaschine gemäß Anspruch 2, **dadurch gekennzeichnet, dass** die Öffnungs- und Schließeinheit ferner einen in den Führungsschienen (121) aufgenommenen und entlang den Führungsschienen (121) gleitenden Schieber (14) umfasst, der mit der zweiten Schwenkachse fest verbunden ist.

5. Kaffeemaschine gemäß Anspruch 1, **dadurch gekennzeichnet, dass** das eine Bauteil als Gehäuse (11) und das andere Bauteil als Abdeckplatte (12) ausgebildet ist.

6. Kaffeemaschine gemäß Anspruch 1, **dadurch gekennzeichnet, dass** das eine Bauteil als Abdeckplatte (12) und das andere Bauteil als Gehäuse (11) ausgebildet ist.

7. Kaffeemaschine gemäß Anspruch 1, **dadurch gekennzeichnet, dass** sich die Abdeckplatte (12) bei ihrer Öffnungsbewegung gegenüber dem Gehäuse (11) zumindest teilweise unterhalb einer Oberkante des Gehäuse (11) befindet, und dass der Bereich der Abdeckplatte (12), der unterhalb der Oberkante des Gehäuses (11) liegt, einen umso größeren Anteil einnimmt, je weiter die Abdeckplatte (12) geöffnet wird.

## Claims

1. Coffee machine (10) with a housing (11), a cover plate (12), that can be arranged in an openable and closeable manner on the top side of the housing (11), an opening and closing unit between the housing (11) and the cover plate (12), embodied so as to allow the cover plate (12) to move downwards towards the housing (11) when opened, wherein the opening and closing unit is at one end fixedly attached by a pivot axis to one of the housing (11) and cover plate (12) components and on the other end is connected to the other component in such a way that it can perform a pivoting motion and wherein the opening and closing unit comprises of a first pivot axis (131), which is fixedly attached to one of the housing (11) and cover plate (12) components, a second pivot axis (132), that allows the other component a pivoting motion, as well as a coupling rod (13) connected between first and second pivot axis (131, 132), **characterised in that** the second pivot axis (132) can slide towards the other component.

2. Coffee machine according to claim 1, **characterised in that** guide rails (121) are arranged on the other component.

3. Coffee machine according to claim 2, **characterised in that** the second pivot axis slides along the guide rails (121).

4. Coffee machine according to claim 2, **characterised in that** the opening and closing unit further comprises of a bar (14) that slides along and is housed in the guide rails (121), that is fixedly attached to the second pivot axis.

5. Coffee machine according to claim 1, **characterised in that** the one component is embodied as the housing (11) and the other component as the cover plate (12).

6. Coffee machine according to claim 1, **characterised in that** the one component is embodied as the cover plate (12) and the other component as the housing (11).

7. Coffee machine according to claim 1, **characterised in that** the cover plate (12) during its opening motion towards the housing (11) is located at least partly below a top edge of the housing (11), and that the area of the cover plate (12) that is positioned below the top edge of the housing (11) takes up more space the further the cover plate (12) is opened.

## Revendications

1. Machine à café (10) avec un carter (11), une plaque de protection (12) ouvrable et fermable disposée sur la face supérieure du carter (11), une unité d'ouverture et de fermeture entre le carter (11) et la plaque de protection (12) formée de manière à ce que la plaque de protection (12) puisse se déplacer vers le bas pendant l'ouverture contre le carter (11), dans laquelle l'unité d'ouverture et de fermeture est, à une extrémité, reliée de manière fixe via un axe de pivotement à l'un des composants du carter (11) et à la plaque de protection (12) et, à l'autre extrémité, de telle manière à l'autre composant que ce dernier est en mesure de décrire un mouvement pivotant et dans laquelle l'unité d'ouverture et de fermeture englobe un premier axe de pivotement (131), relié de manière fixe à l'un des composants du carter (11) et à la plaque de protection (12), un deuxième axe de pivotement (132) qui permet à l'autre composant de décrire un mouvement pivotant, ainsi qu'une barre de couplage (13) accouplée entre le premier et le deuxième axe de pivotement (131, 132), **caractérisée en ce que** le deuxième axe de pivotement (132) peut glisser par rapport à l'autre composant.

2. Machine à café selon la revendication 1, **caractérisée en ce que** des glissières (121) sont disposées sur l'autre composant.

3. Machine à café selon la revendication 2, **caractérisée en ce que** le deuxième axe de pivotement glisse le long des glissières (121).

4. Machine à café selon la revendication 2, **caractérisée en ce que** l'unité d'ouverture et de fermeture englobe en outre un curseur (14) intégré aux glissières (121) et glissant le long des glissières (121), lequel est relié de manière fixe au deuxième axe de pivotement.

5. Machine à café selon la revendication 1, **caractérisée en ce qu'**un composant est exécuté sous forme de carter (11) et l'autre composant sous forme de plaque de protection (12).

6. Machine à café selon la revendication 1, **caractérisée en ce qu'**un composant est exécuté sous forme de plaque de protection (12) et l'autre composant sous forme de carter (11).

7. Machine à café selon la revendication 1, **caractérisée en ce que** la plaque de protection (12) se trouve, lors de son mouvement d'ouverture contre le carter (11) au moins partiellement en dessous d'un bord supérieur du carter (11) et **en ce que** la zone de la plaque de protection (12) se trouvant en dessous du bord supérieur du carter (11) occupe une partie d'autant plus grande que la plaque de protection (12) est fortement ouverte.
